# EUROPEAN PATENT APPLICATION

(11) **EP 3 840 459 A1**
(43) Date of publication of application: **23.06.2021**
(21) Application number: 19218057.8
(22) Date of filing: 19.12.2019
(51) Int. Cl.: H04W 24/10, H04W 28/16, H04W 28/18, H04W 28/20, H04W 72/04

(54) **METHOD FOR MEASURING NETWORK PERFORMANCE AND/OR SERVICE PARAMETERS AND/OR ACTUAL OR CURRENT TRANSMISSION BANDWIDTH USAGE OR ATTAINABLE TRANSMISSION BANDWIDTH IN A MOBILE COMMUNICATION NETWORK INVOLVING A PLURALITY OF CLIENT ENTITIES, MOBILE COMMUNICATION NETWORK, BASE STATION ENTITY, CLIENT ENTITY, COMPUTER PROGRAM AND COMPUTER-PROGRAM PRODUCT**

(71) Applicant: Deutsche Telekom AG, 53113 Bonn (DE)
(72) Inventor: SIALKOWSKI, Daniel, 53113 Bonn (DE); SIEBERT, Matthias, Dr., 53175 Bonn (DE); SIEREDZKI, Thomas, 53227 Bonn (DE)
(74) Representative: Schwöbel, Thilo K.

(57) **Abstract**

The invention relates to a method for measuring network performance and/or service parameters and/or actual or current transmission bandwidth usage or attainable transmission bandwidth in a mobile communication network involving a plurality of client entities, wherein the mobile communication network comprises an access network comprising a plurality of base station entities, and wherein the available radio transmission resources of an air interface between the plurality of client entities and the plurality of base station entities are allocated to specific downlink or uplink transmission links - involving, respectively, a specific one of the plurality of base station entities and a specific one of the plurality of client entities
- by means of realizing a scheduling of resource blocks,
wherein, regarding a specific base station entity and a plurality of specific client entities, being connected to or served by the specific base station entity, the method comprises the following steps:
-- in a first step, the number of resource blocks allocated to each one of the plurality of specific client entities, respectively, in combination with at least one information element selected out of the group of information elements comprising the respective modulation and coding scheme used and further parameters having an influence on the respective usable data transmission rate and/or on the transmitted amount of data are determined or measured at a specific point in time or for a specific time interval, and/or
-- in a second step, the number of resource blocks that are available or free to be allocated or that is able to be allocated, in addition to the resource blocks already allocated to one of the plurality of specific client entities, - at the same specific point in time or for the same specific time interval - by the specific base station entity is determined or measured as well, wherein the first step and/or the second step is repeatedly performed or carried out with respect to a plurality of further specific points in time or for a plurality of further specific time intervals.

## Description

### BACKGROUND

The present invention relates to a method for measuring network performance and/or service parameters and/or actual or current transmission bandwidth usage or attainable transmission bandwidth in a mobile communication network involving a plurality of client entities, wherein the mobile communication network comprises an access network comprising a plurality of base station entities, and wherein the available radio transmission resources of an air interface between the plurality of client entities and the plurality of base station entities are allocated to specific downlink or uplink transmission links - involving, respectively, a specific one of the plurality of base station entities and a specific one of the plurality of client entities - by means of realizing a scheduling of resource blocks.

Furthermore, the present invention relates to a corresponding mobile communication network for measuring network performance and/or service parameters and/or actual or current transmission bandwidth usage or attainable transmission bandwidth in a mobile communication network involving a plurality of client entities, wherein the mobile communication network comprises an access network comprising a plurality of base station entities, and wherein the available radio transmission resources of an air interface between the plurality of client entities and the plurality of base station entities are allocated to specific downlink or uplink transmission links - involving, respectively, a specific one of the plurality of base station entities and a specific one of the plurality of client entities - by means of realizing a scheduling of resource blocks.

Additionally, the present invention relates to a corresponding base station entity Base station entity for measuring network performance and/or service parameters and/or actual or current transmission bandwidth usage or attainable transmission bandwidth in a mobile communication network involving a plurality of client entities, wherein the base station entity is part of an access network of the mobile communication network, and wherein the available radio transmission resources of the air interface between the base station entity and client entities connected thereto are allocated to specific downlink or uplink transmission links - involving, respectively, the base station entity and a specific one of the connected client entities - by means of realizing a scheduling of resource blocks.

Furthermore, the present invention relates to a corresponding client entity for measuring network performance and/or service parameters and/or actual or current transmission bandwidth usage or attainable transmission bandwidth in a mobile communication network, and to a computer program as well as a computer program product for measuring network performance and/or service parameters and/or actual or current transmission bandwidth usage or attainable transmission bandwidth in a mobile communication network.

In mobile radio networks, the user equipments (or client entities) typically share the available resources in a radio cell (in particular regarding the air interface between base station and mobile user equipments or client entities), i.e. it is a shared medium, so that the achievable transmission rate of a user depends not only on a multitude of parameters such as the radio channel quality or the subscriber hardware, but also in particular on the use of the mobile radio network by other user equipments or client entities, especially within the considered radio cell. This dependency leads to the problem that, with known measurement methods, it is not possible to make a simultaneous statement about the maximum possible transmission rate or load for several users at the same time.

### SUMMARY

An object of the present invention is to provide a method for measuring network performance and/or service parameters and/or actual or current transmission bandwidth usage or attainable transmission bandwidth in a mobile communication network involving a plurality of user equipments or client entities such that - inter alia - it is possible to make a simultaneous statement about the maximum possible transmission rate or load for several users at the same time, i.e. the invention especially allows measurements or statements to be made about the expected maximum transmission rate of each subscriber in a mobile radio network (or in a considered radio cell) with a shared medium, this statement being able to be made for each subscriber individually and at periodic points in time.

The object of the present invention is achieved by a method for measuring network performance and/or service parameters and/or actual or current transmission bandwidth usage or attainable transmission bandwidth in a mobile communication network involving a plurality of client entities, wherein the mobile communication network comprises an access network comprising a plurality of base station entities, and wherein the available radio transmission resources of an air interface between the plurality of client entities and the plurality of base station entities are allocated to specific downlink or uplink transmission links
- involving, respectively, a specific one of the plurality of base station entities and a specific one of the plurality of client entities - by means of realizing a scheduling of resource blocks, wherein, regarding a specific base station entity and a plurality of specific client entities, being connected to or served by the specific base station entity, the method comprises the following steps:
   -- in a first step, the number of resource blocks allocated to each one of the plurality of specific client entities, respectively, in combination with at least one information element selected out of the group of information elements comprising the respective modulation and coding scheme used and further parameters having an influence on the respective usable data transmission rate and/or on the transmitted amount of data are determined or measured at a specific point in time or for a specific time interval, and/or
   -- in a second step, the number of resource blocks that are available or free to be allocated or that is able to be allocated, in addition to the resource blocks already allocated to one of the plurality of specific client entities by the specific base station entity is determined or measured as well at the same specific point in time or for the same specific time interval, wherein the first step and/or the second step is repeatedly performed or carried out with respect to a plurality of further specific points in time or for a plurality of further specific time intervals.

According to the present invention, it is proposed to be able to provide measurement data or assessment data regarding a multitude of different user equipments or mobile client entities at a comparatively low granularity level, especially in the time dimension, but also regarding different user equipments or mobile client entities separately.

It is advantageously possible according to the present invention that the method does not influence the regular data traffic, e.g. by means of the influence of the measurement itself on the current data traffic. The knowledge of the network performance and/or service parameters on a very granular level, especially the knowledge of the actual or current transmission bandwidth usage or attainable transmission bandwidth regarding individual user equipments or client entities, allows statements to be made about the utilization of the network from the perspective of the individual considered entity (i.e. individual user equipments or individual client entities).

According to conventionally known measurement or assessment methods, especially measurements regarding bandwidth (or other service level parameters) available to a user equipment, it is often only the best case which is considered in shared medium systems. Hence, it is determined what the currently available maximum transmission rate is or would be under the assumption of an optimal situation. In particular, it is typically assumed that the mobile radio system is used exclusively by only one user equipment and that the radio channel does not prevent the transmitting and receiving hardware from reaching the maximum transmission rate. This leads to the known specifications, as they are known in particular for DSL connections or also for LTE speeds, that only indicate "up to" which value bandwidth is available or can be used.
For a more realistic view, which takes into account the current situation in a given mobile communication network or part thereof, two different conventionally known approaches can generally be distinguished:
In passive measurements, available indicators are monitored and on the basis of these, conclusions are drawn about, for example, the possible maximum transfer rates. The known methods typically collect indicators by intercepting interfaces in and on the core network of a mobile network, i.e. in the example of an LTE network, especially at the S1-interface (i.e. between the radio access network and the packet core) and at the SGi interface (i.e. between the packet core and the packet data network, as well as at the internal interfaces of the packet core.
A typical key figure indicator that is determined is, for example, the data throughput at an interface (e.g. between a base station and the core network). This approach is also used by the Policy Control and Charging Rules Function in an LTE mobile network to determine the data throughput of individual subscribers. The second known approach is active measurement. In these, artificial or mock data traffic is generated and transmitted. In the case of a measurement of the maximum transmission rate of an individual subscriber, the artificial or mock data traffic (in the uplink or downlink) of the considered subscriber is continuously increased until a saturation can be observed and thus the maximum possible transmission rate has been determined. A large number of measurement tools based on this principle are available e.g. for measuring access speed. The common mobile network comparison ratings also make use of this procedure.
The biggest drawback of a best case approach is that the assumed ideal situation are only rarely really fulfilled and thus the calculated best value is rarely or never reached in practice. In particular, the assumption of an ideal radio channel and the exclusive use of a mobile radio network can hardly be maintained in reality. Thus, this method does not allow practical statements to be made about the maximum transmission rates of individual mobile phone subscribers, which vary greatly with time.
With the known passive measurement methods, two weaknesses can be identified in particular: First of all, the information is typically picked up at interfaces at and in the packet core, which are relatively far away from the user equipment (UE) of the mobile subscriber.
The data are therefore already aggregated in various ways, so that it is at least more difficult to draw conclusions about the individual subscribers. Many key figures that are available on the air interface between user equipment and radio access network, for example, are not passed on to higher nodes of the network and are therefore not available when these interfaces are taken as the source of the measurement data.
The second weakness is that it is not necessarily possible to deduce the maximum possible transmission rate by reading out key figures for a subscriber. Without further interpretation, only conclusions about "what occurred" instead of "what would have been possible" are possible. Thus, even with the successful measurement of the transmission rate of a mobile phone subscriber, it initially remains completely open whether this corresponds to the maximum possible rate. Did the user only want to transmit so much data or would it have been more if the mobile network had made this possible?
It is precisely this problem that is avoided in active measurements by generating so much artificial or mock traffic that it is ensured that there is an actual limitation by the mobile network. However, artificial or mock traffic in particular causes a number of weaknesses in active measurements: In any case, the transmission of artificial or mock traffic requires additional resources in addition to regular user traffic. In this case, the term resources can be understood both physically and in terms of the capacity used. For example, the transmission of artificial or mock traffic requires energy, which is often limited by the use of a rechargeable battery, especially in the UE. In addition, there is the use of the capacity of a radio cell which, for example, is no longer available to other subscribers and, in the worst case, negatively affects operative user traffic. Furthermore, it should be assumed that other active measurements running in parallel influence each other.

If it is assumed that two mobile subscribers A and B are located within a sector of a base station, what would be interesting is the maximum possible transfer rate that both subscribers would achieve if they had to transfer data. With an active measurement, artificial or mock data traffic would be generated and the transmission rate achieved would be determined. There can be two drawbacks: On the one hand, there can be a negative influence on the regular user traffic by the artificial or mock measurement traffic. Prioritization is required to ensure that regular user traffic is always transmitted preferentially in order to prevent this effect. Such a mechanism, however, is complex to implement and can in turn falsify the measurement. For example, prioritization must first ensure that the user traffic of, for example, subscriber A has priority over its own artificial measurement traffic. The active measurement may therefore only use the available capacity of subscriber A and fill up the transmission until the maximum data rate is reached. In addition, the aim is to ensure that the measurement traffic of subscriber A does not displace or restrict the user traffic of subscriber B either. However, this is not possible, since in this case the measurement would actually no longer provide a useful result. In case that subscriber B is fully loaded with user traffic on the base station; in this case, the active measurement of subscriber A could not transmit any data at all with lower priority (in contrast to the case where subscriber A would want to transmit user data). It follows that at the subscriber level, the priority of artificial or mock measurement traffic and user traffic must always be identical in order to obtain a representative result. In the example, however, this leads to the fact that the active measurement of subscriber A restricts the user traffic of subscriber B. The result is that the user traffic of subscriber A is always the same. In addition, the measurement may cause interference for a further subscriber C so that user traffic outside the mobile cell is also restricted. It can therefore be summarised that active measurements, despite complex prioritisation mechanisms, can always have a negative effect on regular user traffic. The second negative effect is the possible influence of artificial measurement traffic on each other. If the measurements of subscribers A and B do not overlap in time, the individual maximum transmission rate that each of the subscribers could have achieved in the respective measurement interval is determined. However, it cannot be excluded that the measurements overlap in time or at least partially overlap; then the base station would distribute the resources between both subscribers using a scheduling algorithm. In this case, the result of the measurement is only of limited use. In reality, the participants could have achieved a higher transmission rate than determined by the measurement. We can see that, optimally, a mechanism is needed to ensure that only one measurement takes place at a time. However, to implement such a solution requires a lot of efforts.
In addition, an active measurement has the disadvantage that it allows only limited conclusions to be drawn about the cause of the limitation. E.g. in case of a rather low measured maximum transmission rate, it is unclear whether the radio connection to the subscriber was so bad that only a very low maximum transmission rate was possible or whether it was caused by a very high load on the base station by other subscribers

The main advantage of the solution according to the present invention lies in the fact that the individual possible maximum transmission rates of the subscribers can be determined without the measurement itself having an influence. The measurement approach according to the present invention is non-invasive: There is neither an influence on the regular user traffic, nor an influence on the measurements among each other. No additional artificial or mock data needs to be exchanged between the subscriber and the base station. In addition to specifying the maximum transmission rates, the method and system according to the present invention also allows the cause of the limitation to be determined. Detailed statements on the utilization and resource distribution of the base station are possible, as well as on the quality of the radio channel. This enables a much more extensive use of the data in the context of network optimization. Thus the utilization of the network can be determined from individual user level. This can be used to derive optimization options such as the construction of additional base stations or antenna realignments. In addition, it is also advantageously possible according to the present invention to prove that service level agreements have indeed been adhered to. In particular, minimum transmission rates can be verified despite a shared medium by comparing them with the individually determined maximum transmission rates. Hence, on the basis of the collected data, a detailed interpretation can be carried out so that instead of a "what situation occured" consideration, as is usual with passive measurement methods, a "what would have been possible" analysis can be carried out. The influence of various network parameters (such as the scheduling algorithm used) can be analyzed and taken into account. In this context, it is also possible to consider scenarios such as simultaneous access by several users. In this way it is also possible to determine which maximum transfer rates can be achieved if it is assumed that several users want to transfer data at the same time. The inventive method and system can be implemented both exclusively on the part of the user equipments or client entities (as is typically the case with active measurements) and on the part of the network (as is typically the case with passive measurements). This means that all necessary data can be collected either from the user equipments or client entities or from the base stations.

Hence, according to the present invention a method for measuring network performance and/or service parameters (especially actual or current transmission bandwidth usage or attainable transmission bandwidth) in a mobile communication network. The mobile communication network comprises or involves a plurality of client entities, as well as an access network comprising a plurality of base station entities. Typically, each one of the plurality of base station entities serves a radio cell (or radio coverage area). Within each such radio cell or radio coverage area, the available radio transmission resources are typically the transmission resources of the air interface between a plurality of client entities and the corresponding base station entity. The considered base station entity is hereinafter also called the specific base station entity. Hence, the available radio transmission resources (within that radio cell) are allocated to specific downlink or uplink transmission links - involving, respectively, the specific base station entity, and one or a plurality of specific client entities that are located or positioned within the radio coverage area of the specific base station entity - by means of realizing a scheduling of resource blocks.
According to the present invention, and regarding a (or the) specific base station entity and a plurality of specific client entities (i.e. client entities within the radio cell of the specific base station entity), being connected to or served by the specific base station entity, the method comprises the following steps:
-- in a first step, it is determined or measured (typically, but not necessarily, by the specific base station entity) - at a specific point in time or for a specific time interval - the number of resource blocks allocated to each one of the plurality of specific client entities, respectively, in combination with at least one information element selected out of the group of information elements comprising the respective modulation and coding scheme used and further parameters having an influence on the respective usable data transmission rate and/or on the transmitted amount of data, and/or
-- in a second step, it is determined or measured as well (likewise typically, but not necessarily, by the specific base station entity) - at the same specific point in time or for the same specific time interval - the number of resource blocks that are available or free to be allocated or that is able to be allocated, in addition to the resource blocks already allocated to one of the plurality of specific client entities by the specific base station entity.
Furthermore, the first step and/or the second step (preferably both the first and the second step) is (or are) repeatedly performed or carried out with respect to a plurality of further specific points in time or for a plurality of further specific time intervals.

According to the present invention, it is advantageously possible and preferred that both the first and the second steps are performed or carried out at the same specific point in time or for the same specific time interval, and wherein both the first and the second steps are repeatedly performed or carried out with respect to a plurality of further specific points in time or for a plurality of further specific time intervals.

By means of performing or carrying out both the first and the second steps at the same specific point in time (or for the same specific time interval) and repeating both steps (at a plurality of further specific points in time or for a plurality of further specific time intervals) it is advantageously possible to get a detailed picture of the real load and traffic situation of the user equipments or client entities within the radio cell of the considered specific base station entity. If this is also done (as it is, of course, proposed according to the present invention) for a plurality of base station entities - especially such that such a plurality of base station entities are covering a continuous geographical area -, then a detailed picture of the real load and traffic situation of all the user equipments or client entities served by these considered plurality of (specific) base station entities is possible according to the present invention. This provides for a deep insight in things such as current bandwidth used, available bandwidth within different radio cells, etc. It would even be possible to detect spare (transmission) capacity at one of the base station entities, associated with excessive load at a neighboring base station entity, providing - at least potentially - the possibility to move one or a plurality of user equipments or client entities from the neighboring base station entity (being saturated) to the one having spare capacity such that the available network capacity is used more efficiently.

Furthermore, it is advantageously possible and preferred according to the present invention that the plurality of client entities - with regard to which the number of allocated resource blocks in combination with at least one information element selected out of the group of information elements comprising the modulation and coding scheme and further parameters having an influence on the respective usable data transmission rate and/or on the transmitted amount of data are determined or measured - correspond to all client entities connected to or served by the specific base station entity, especially at the respective specific point in time or the respective specific time interval of the considered determination or measurement.

By means of conducting the measurements and/or obtaining the data or detection values according to the present invention not only for a part or for some of the user equipments or client entities connected to or served by the specific base station entity, but for all the user equipments or all client entities connected to or served by the specific base station entity, it is advantageously possible to obtain the complete picture of the situation of network load and spare capacity for the considered specific base station entity.

Furthermore, and according to an alternative embodiment of the present invention, it is preferred that the specific point in time and the further specific points in time are periodic points in time according to a periodicity corresponding to the predefined time length of the resource blocks, or multiples thereof, especially integer multiples thereof, or wherein the lengths of the specific time interval and of the further specific time intervals correspond to the predefined time length of the resource blocks, or to multiples thereof, especially integer multiples thereof, wherein especially the specific point in time and/or the specific time interval and the further specific points in time and/or the further specific time intervals together continuously cover a certain stretch of time for which network performance and/or service parameters and/or actual or current transmission bandwidth usage or attainable transmission bandwidth is or are measured.

By means of the specific point in time together with the further specific points in time being or corresponding to periodic points in time according to a periodicity corresponding to the predefined time length of the resource blocks, or multiples thereof (and/or by means of the lengths of the specific time interval together with the further specific time intervals being or corresponding to the predefined time length of the resource blocks, or to multiples thereof), it is advantageously possible according to the present invention that a very fine granular measurement of the available and used resources is possible to obtain by means of the method according to the present invention and/or by means of the mobile communication network or system or base station entity or client entity according to the present invention.
According to the present invention, it is repeatedly referred to the wording "a specific point in time" or "a further specific point in time" or "a plurality of further specific points in time" vs. "a specific time interval" or "a further specific time interval" or "a plurality of further specific time intervals". The idea behind these wordings is simply to convey the idea that the scheduling operation performed by or within - typically - the (specific) base station entity (i.e. ideally each base station entity of the mobile communication network or of a part thereof) typically refers only (or minimally) to time portions or time intervals or time periods (hereinafter also called scheduling time unit) corresponding to either one or a plurality of whole resource blocks (especially to twice the time span of a resource block, i.e. to pairs of (especially immediately successive) resource blocks; or even to a higher number (than two) of resource blocks). In case, e.g., that the number of allocated resource blocks (allocated, typically, to one or each one of a plurality of client entities) or the number of available resource blocks (free to be allocated) is determined or measured according to the present invention, this determination or measurement normally always refers, in essence, to such a specific one time portion or time interval or time period corresponding to either one scheduling time unit or to a plurality of (integers) of the scheduling time units, and the wording "measurement (or determination) at a (further) specific point in time" is meant to refer to such one scheduling time unit or to such a plurality of (normally integers) of scheduling time units as a whole (even though the actual measurement point in time (or determination point in time or point of time of recording such number of allocated or available resource blocks) is at any point of time within that time period or slightly outside of it (earlier or later)). Correspondingly the wording "measurement (or determination) for (or at) a (further) specific time interval" is likewise meant to refer to such one scheduling time unit or to such a plurality of (normally integers) of scheduling time units as a whole.
It is especially preferred according to the present invention - in order to especially get a complete picture of the resource utilization within a specific radio cell or a plurality of (preferably contiguous) radio cells or corresponding base station entity or plurality of base station entities - that the plurality of such measurements or determinations together continuously cover a certain stretch of time for which network performance and/or service parameters and/or actual or current transmission bandwidth usage or attainable transmission bandwidth is or are measured, i.e. this also means that the specific time interval together with the further specific time intervals (and/or the specific point in time together with the further specific points in time) continuously cover such a certain stretch of time.

According to a further preferred embodiment of the present invention, the resource blocks correspond to resource blocks or pairs of consecutive resource blocks according to the GSM standard, global system for mobile communication standard, UMTS standard, universal mobile telecommunication standard, DECT standard, digital enhanced cordless telecommunications standard, LTE standard, long term evolution standard, or according to the 5G/NR standard, fifth generation/new radio standard.

According to further embodiments of the present invention, the base station entities of the access network correspond to eNodeB nodes according to the LTE standard, long term evolution standard, or gNodeB nodes according to the 5G/NR standard, fifth generation/new radio standard.

Furthermore, it is advantageously possible and preferred according to the present invention that the determination or the measurement of
-- the number of allocated resource blocks in combination with at least one information element selected out of the group of information elements comprising the modulation and coding scheme used and the parameters having an influence on the respective usable data transmission rate and/or on the transmitted amount of data, and/or
-- the number of resource blocks that are available or free to be allocated or that is able to be allocated, in addition to the resource blocks already allocated
is performed or carried out
-- at and/or by the specific base station entity or a module or element thereof regarding the plurality of client entities connected to or served by the specific base station entity, or
-- at and/or by each one of the plurality of client entities connected to or served by the specific base station entity,
wherein especially, in a third step, subsequent to the first and/or second step, measurement data corresponding to such determination or measurement is transmitted to a measurement node or entity within the mobile communication network.

Thereby, it is advantageously possible to flexibly realize the inventive measurement method or determination method (and/or the inventive system, mobile communication network, base station entity and/or user equipment or client entity) as the point of measurement or determination can be flexibly chosen to be either the base station entity or the client entity or user equipment.

Furthermore, it is advantageously possible and preferred according to the present invention that - based on the measurement data and regarding the plurality of client entities, respectively, being connected to or served by the specific base station entity - the maximum data transmission rate and/or the attainable data transmission rate and/or the load factor is determined or is able to be determined individually regarding the specific point in time or the specific time interval and/or regarding each one of the further specific points in time or the further specific time intervals, respectively.

Thereby, it is advantageously possible to have a detailed view of the current situation within the mobile communication network (or, at least, part thereof) on a very fine grained level.

According to a further preferred embodiment of the present invention, the specific client entities correspond
-- either to individual user equipments or client devices being connected to or served by the specific base station entity,
-- or to local networks being connected to or served by the specific base station entity, the local networks encompassing or serving a plurality of user equipments or client devices, wherein the local networks are especially mobile local networks, and especially abord an airborne vehicle such as an aircraft or a rotorcraft, or a land vehicle such as a train or a bus, or a waterborne vessel such as a ship, a hovercraft or a submarine.

Thereby, it is advantageously possible to apply the inventive method, system, mobile communication network, base station entity and/or user equipment or client entity at various network levels or for various network configurations and/or for various user groups or measurement scenarios.

Additionally, the invention relates to and the object of the present invention is achieved by a mobile communication network for measuring network performance and/or service parameters and/or actual or current transmission bandwidth usage or attainable transmission bandwidth in a mobile communication network involving a plurality of client entities, wherein the mobile communication network comprises an access network comprising a plurality of base station entities, and wherein the available radio transmission resources of an air interface between the plurality of client entities and the plurality of base station entities are allocated to specific downlink or uplink transmission links - involving, respectively, a specific one of the plurality of base station entities and a specific one of the plurality of client entities - by means of realizing a scheduling of resource blocks, wherein, regarding a specific base station entity and a plurality of specific client entities, being connected to or served by the specific base station entity, the mobile communication network is configured such that:
-- the number of resource blocks allocated to each one of the plurality of specific client entities, respectively, in combination with at least one information element selected out of the group of information elements comprising the respective modulation and coding scheme used and further parameters having an influence on the respective usable data transmission rate and/or on the transmitted amount of data are determined or measured at a specific point in time or for a specific time interval, and/or
-- the number of resource blocks that are available or free to be allocated or that is able to be allocated, in addition to the resource blocks already allocated to one of the plurality of specific client entities by the specific base station entity is determined or measured as well at the same specific point in time or for the same specific time interval,
wherein this determination or measurement is repeatedly performed or carried out with respect to a plurality of further specific points in time or for a plurality of further specific time intervals.

By means of the inventive mobile communication network, it is thereby advantageously possible according to the present invention to be able to provide measurement data or assessment data regarding a multitude of different user equipments or mobile client entities at a comparatively low granularity level, especially in the time dimension, but also regarding different user equipments or mobile client entities separately.

Additionally, the object of the present invention is achieved by and the invention relates to a base station entity for measuring network performance and/or service parameters and/or actual or current transmission bandwidth usage or attainable transmission bandwidth in a mobile communication network involving a plurality of client entities, wherein the base station entity is part of an access network of the mobile communication network, and wherein the available radio transmission resources of the air interface between the base station entity and client entities connected thereto are allocated to specific downlink or uplink transmission links - involving, respectively, the base station entity and a specific one of the connected client entities - by means of realizing a scheduling of resource blocks, wherein, regarding the base station entity and a plurality of specific client entities, being connected to or served by the base station entity, the base station entity is configured such that:
-- the number of resource blocks allocated to each one of the plurality of specific client entities, respectively, in combination with at least one information element selected out of the group of information elements comprising the respective modulation and coding scheme used and further parameters having an influence on the respective usable data transmission rate and/or on the transmitted amount of data are determined or measured at a specific point in time or for a specific time interval, and/or
-- the number of resource blocks that are available or free to be allocated or that is able to be allocated, in addition to the resource blocks already allocated to one of the plurality of specific client entities by the specific base station entity is determined or measured as well at the same specific point in time or for the same specific time interval,
wherein this determination or measurement is repeatedly performed or carried out, especially by the base station entity, with respect to a plurality of further specific points in time or for a plurality of further specific time intervals.

By means of the inventive base station entity, it is thereby advantageously possible according to the present invention to be able to provide measurement data or assessment data regarding a multitude of different user equipments or mobile client entities at a comparatively low granularity level, especially in the time dimension, but also regarding different user equipments or mobile client entities separately.

Additionally, the present invention relates to a client entity for measuring network performance and/or service parameters and/or actual or current transmission bandwidth usage or attainable transmission bandwidth in a mobile communication network being used or being usable in or as part of the inventive mobile communication network, or with or served by the inventive base station entity, or for performing the inventive method.

Additionally, the present invention relates to a computer program comprising a computer readable program code which, when executed on a computer or on a base station entity or on a client entity or on a network node of a mobile communication network or in part on a base station entity and/or in part on a client entity and/or in part on a network node of the mobile communication network, causes the base station entity or the client entity or the network node of the mobile communication network to perform a method as described before.

Furthermore, the present invention relates to a computer program product for measuring network performance and/or service parameters and/or actual or current transmission bandwidth usage or attainable transmission bandwidth in a mobile communication network involving a plurality of client entities, the computer program product comprising a computer program stored on a storage medium, the computer program comprising program code which, when executed on a computer or on a base station entity or on a client entity or on a network node of a mobile communication network or in part on a base station entity and/or in part on a client entity and/or in part on a network node of the mobile communication network, causes the base station entity or the client entity or the network node of the mobile communication network to perform a method as described before.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an embodiment of a system and/or mobile communication network according to the present invention comprising a plurality of user equipments or mobile client entities.
Figure 2 schematically and exemplarily illustrates a scheduling situation regarding a specific base station entity and regarding two different specific user equipments or client entities showing an implementation of the present invention.
Figure 3 schematically illustrates an exemplary communication diagram according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

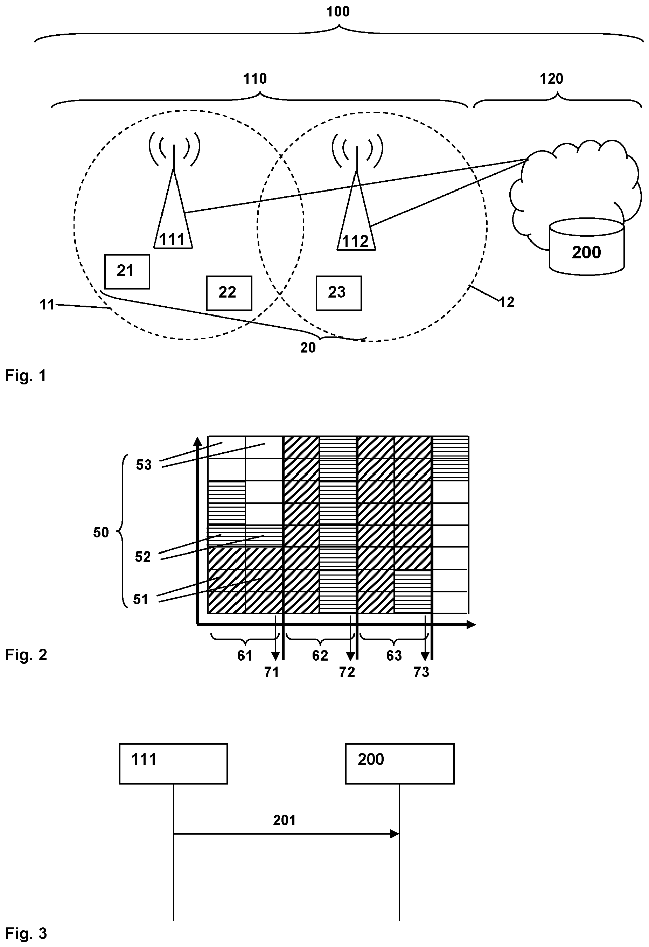

In Figure 1, an exemplary embodiment of a system and/or mobile communication network 100 according to the present invention is schematically shown. The mobile communication network 100 comprises a plurality of user equipments 20 or mobile client entities 20 that are, respectively, connected to the mobile communication network 100, wherein this plurality of user equipments 20 or mobile client entities 20 exemplarily comprises a first user equipment 21 or first (mobile) client entity 21, a second user equipment 22 or second (mobile) client entity 22, as well as a third user equipment 23 or third (mobile) client entity 23. Typically and conventionally, the mobile communication network 100 comprises a (mobile) access network 110 or a radio access network 110 as well as a core network 120. The radio access network or (mobile) access network 110 is schematically and exemplarily shown as comprising two base station entities, schematically representing the radio access network, namely a first base station entity 111, and a second base station entity 112. The first base station entity 111 has or serves (or corresponds to) a first radio cell or radio coverage area indicated by means of a dashed circle and reference sign 11, whereas the second base station entity 112 has or serves (or corresponds to) a second radio cell or radio coverage area indicated by means of likewise a dashed circle and reference sign 12. The (plurality of) user equipments 20 (i.e. each one of the first, second, third user equipments 21, 22, 23) use the mobile communication network 100 for communication purposes, especially communication services being provided by the mobile communication network 100, such as internet connectivity, phone calls, instant messaging or the like. The core network (part) of the mobile communication network 100 is schematically shown as comprising a measurement node or (measurement) entity 200. However, this measurement node or entity 200 does not necessarily be part of the core network 120 of the mobile communication network 100; it is also possible and preferred according to the present invention that the measurement node or entity 200 is only connected to the mobile communication network 100 or assigned or is able to accessed by the mobile communication network 100 or a network node thereof.

According to the present invention, the inventive method, system, mobile communication network, base station entity and/or user equipment or client entity provides for a measurement or determination or assessment of network performance and/or of service parameters and/or of actual or current transmission bandwidth usage or attainable transmission bandwidth in the mobile communication network 100, involving a plurality of client entities 20. Within the mobile communication network 100 (i.e. within, typically, each radio cell, hence, at each base station entity 111, 112), the available radio transmission resources of the respective air interface or air interfaces (i.e. between the considered base station entity 111, 112 and the respective plurality of client entities 20 camping on or within (or being served by) these radio cells 11, 12) are allocated to specific (i.e. individual) downlink or uplink transmission links - involving, respectively, a specific one of the plurality of base station entities 111, 112 and a specific one of the plurality of client entities 20 or user equipments 20 - by means of realizing a scheduling of resource blocks 50. In order to explain or describe the inventive method, a specific base station entity 111 is considered together with a plurality of specific client entities 21, 22, being connected to or served by this specific base station entity 111. According to the present invention, the inventive method comprises the following steps:
-- in a first step, the number of resource blocks allocated 51, 52 to each one of the plurality of specific client entities 21, 22, respectively, in combination with at least one information element selected out of the group of information elements comprising the respective modulation and coding scheme used and further parameters having an influence on the respective usable data transmission rate and/or on the transmitted amount of data are determined or measured at a specific point in time 61 or for a specific time interval 71, and/or
-- in a second step, the number of resource blocks that are available 53 or free to be allocated or that is able to be allocated, in addition to the resource blocks already allocated to one of the plurality of specific client entities 21, 22 by the specific base station entity 111 is determined or measured as well at the same specific point in time 61 or for the same specific time interval 71,
and the first step and/or the second step is (or are) repeatedly performed or carried out with respect to a plurality of further specific points in time 62, 63 or for a plurality of further specific time intervals 72, 73.

This is schematically shown in Figure 2; Figure 2 schematically and exemplarily illustrates a scheduling situation regarding the specific base station entity 111 and regarding two different specific user equipments or client entities (i.e. the first user equipment 21 or client entity 21 and the second user equipment 22 or client entity 22) showing an implementation of the present invention. In this respect, the present invention is described by means of a simplified model regarding the allocation (or distribution) of resources, e.g. for mobile communication networks according to the GSM standard, and/or the LTE standard and/or the 5G/NR standard. Figure 2 shows a simplified resource grid of a base station entity, i.e. of the considered specific base station entity 111: In case that several subscribers (i.e. user equipments or client entities 20 or the specific first and second client entities 21, 22) want (or need) to use the mobile communication network 100 (i.e. the specific base station entity 111) in parallel, a multiple access scheme (TDMA, FDMA, OFDMA, etc.) is required to distribute (or allocate) the transmission capacity among the different subscribers (or user equipments or client entities 21, 22). This results in a distribution into resource blocks as such resource blocks are the smallest resource unit that is able to be allocated to a subscriber (or user equipment or client entity 21, 22). The scheduler (or scheduling unit or entity or node or module) in the (specific) base station entity 111 distributes these (initially available) resource blocks to (or among) the different subscribers (i.e. user equipments or client entities) as required, depending on the capabilities of the hardware in the base station and in the user equipment or client entity, and depending on the characteristics of the radio channel, different modulation and coding schemes (MCS) can be used for a transmission. Depending on the MCS selected, a different amount of data can be transmitted within a (or per) resource block. According to the present invention, the information about both the resource block distribution (or allocation), and the usable different modulation and coding schemes per user equipment or per client entity is required. Both pieces of information are available at the (specific) base station entity 111 and is accessed (preferably there) via a suitable interface. In this case, no additional tapping of information at the participants (i.e. user equipments and/or client entities) is necessary. Alternatively, if access to the base station is not easily possible, the required information can theoretically also be collected from the participants (i.e. user equipments and/or client entities). They know the resource blocks allocated to them as well as the MCS to be used. If, in addition, the information about the total number of resource blocks (and/or the number of available or free resource blocks) at a given base station (or at the specific base station entity 111) as well as the respective connected subscribers (i.e. user equipments and/or client entities) is known, the distribution of the resource blocks could also be inferred. However, we consider this alternative to be less easily implemented compared to tapping (or measuring and/or detecting) the required information directly at the considered (or specific) base station entity or plurality of base station entities.
Depending on the complexity of the (specific) base station entity's scheduling procedure, additional information (in addition at least to the number of allocated and/or available resource blocks or in addition to the number of allocated and/or available resource blocks as well as the MCS values) - such as network and configuration parameters and/or the bandwidth used or the antenna configuration - may be required to predict the behavior of the scheduling procedure. In the following, it is assumed that all required information is available. In addition, it is assumed that basic network and configuration parameters, such as the bandwidth used or the antenna configuration, are known.

In this scenario described, according to the present invention it is aimed at using the information provided (or measured or detected) in order to deduce the individual maximum possible transmission rates of the subscribers (i.e. of the specific user equipments and/or of the specific client entities) as well as the utilization of the network from the subscriber's perspective. The method according to the present invention does not influence the network and the data should be determined for all participants (at least within the specific radio cell or at the specific base station entity considered, but preferably at least within a plurality of radio cells) at the same time. The collected information are able to be used, for example, for network monitoring, optimization or also for proof of achieved service level agreements (SLAs).

According to the present invention, these values or measurement data or conclusions regarding network monitoring, optimization and/or for proof of achieved service level agreements (SLAs) are obtained by means of (especially retrospectively) calculating - individually for each participant (or user equipment or client entity) - which maximum transmission rate the user equipment or client entity could have reached, if there had been enough data (requested by this specific user equipment or client entity) to transmit. The analysis is carried out at the specific point in time 61 or for a specific time interval 71, and also periodically (i.e. at successive further specific points in time 62, 63 or for a plurality of further specific time intervals 72, 73, cf. Figure 2), assuming that the properties of the radio channel do not change within one observation interval and are constant. Depending on the specific application and the associated channel characteristics, the selected interval duration or periodicity is sufficiently short (in the example of Figure 2, two successive resource blocks 50. The duration of a resource block 50 typically represents the lower limit. The maximum achievable transfer rate is specified as the mean value over the duration of the measurement interval or periodicity. In Figure 2, three different kinds of resource blocks 50 are schematically shown, namely a first kind 51 of resource blocks (schematically illustrated by the diagonally hatched resource blocks in Figure 2), allocated to the first user equipment or client entity 21, a second kind 52 of resource blocks (schematically illustrated by the horizontally hatched resource blocks in Figure 2), allocated to the second user equipment or client entity 22, and a third kind 53 of resource blocks (schematically illustrated by the unhatched resource blocks in Figure 2) which is not allocated to one of the specific user equipments or client entities 21, 22.
Of course, also the information about the MCS, respectively used by the first specific user equipment or client entity 21, and used by the second specific user equipment or client entity 22 is needed in order to be able to provide a statement (or an assessment) about how much data each specific user equipment or client entity 21, 22 is able to transfer (send or receive) within a resource block 50. Using, e.g., the example of LTE, the transmittable data volume can be derived directly from the MCS, the antenna configuration and the transport block size (see http://anisimoff.org/eng/lte throughput.html); for other mobile communication standards, different parameters having an influence on the respective usable data transmission rate and/or on the transmitted amount of data might apply. Accordingly, the transferable amount of data per resource block 50 can be calculated for other mobile radio standards. According to one alternative according to the present invention, it is assumed that no data has to be retransmitted due to errors but that the coding scheme used is able to already correct all transmission errors; according to another alternative according to the present invention, retransmissions of data are taken into consideration. Especially according to the present invention, the data volumes and transmission rates are considered on the radio layer. If the net transmission rates are to be determined, various overheads or overhead portions (regarding - for example - the MAC information and/or the IP information (especially header information), etc.) may have to be subtracted. If necessary, an estimate has to be made.

Knowing the amount of data that each specific subscriber (i.e. in the considered example the first specific user equipment or client entity 21 and the second specific user equipment or client entity) can transmit within a resource block 50, the question of the total amount of data that can be transmitted by a user within a measurement or assessment time interval is primarily related to the number of resource blocks allocated to the respective specific user equipment or client entity within a considered measurement or assessment time period by the scheduler of the specific base station 111. For this purpose, it is proposed according to the present invention to simulate the scheduling algorithm used.
For the specific example represented in Figure 2 (where the measurement or assessment time period corresponds to the duration of two successive resource blocks 50), it is, for example, assumed that a simplified scheduler is used, which, if possible, assigns (or allocates) the same number of resource blocks to all user equipments or client entities in the radio cell, if they have data to transmit, in relation to a period equal to the measurement or assessment time period (this represents a significantly simplified scheduling algorithm compared to reality, however the used scheduler is just an example, and any other scheduling could be used as well; the invention is independent of the scheduling algorithm). It is assumed that all information is available, so that distributions of the resource blocks can be simulated afterwards by the scheduler on the individual participants.
In the first period 61 (or first observation (or measurement) time) in Figure 2, not all available resource blocks are allocated: only six resource blocks (first resource blocks 51) are allocated to the first user equipment or client entity 21, four resource blocks (second resource blocks 52) are allocated to the second user equipment or client entity 22, and six resource blocks (third resource blocks 53) are available (or not allocated), i.e. in the first considered period 61, there has not been enough data traffic requested from subscribers 21, 22 to fully load the radio cell or have all available resource blocks of the radio cell (or of the specific base station entity 111) allocated. According to the present invention, for each individual subscriber 21, 22, it is looked at how many resource blocks 50 these subscribers 21, 22 could have been allocated (additionally) in case that there had been enough data (requested by these considered subscribers or specific user equipments or client entities 21, 22) to be transmitted. Since both specific subscribers 21, 22 were able to transmit their entire (requested) data traffic in the considered time interval (first period 61), the observation is very simple: A total of six (third) resource blocks 53 remained unused and could have been allocated to the specific subscribers 21, 22. This results in the following maximum transfer rates of the subscribers: The maximum transfer rate of the first specific user equipment or client entity 21, corresponds to 12 resource blocks (six (first resource blocks 51) used or allocated and six (third resource blocks 53) available), or the data transmission volume represented by 12 resource blocks, divided by the considered time period, i.e. the first period 61. For the second specific user equipment or client entity 22, corresponds to 10 resource blocks (four (second resource blocks 52) used or allocated and six (third resource blocks 53) available), or the data transmission volume represented by 10 resource blocks, divided by the considered time period, i.e. the first period 61. Regarding the individual workloads (or percentage of utilization) of the specific user equipments or client entities 21, 22 the following holds: The utilization of the first subscriber (or specific user equipment or client entity 21) corresponds to six (first resource blocks 51) used or allocated, divided by the sum of the available and used or allocated resource blocks, i.e. divided by 12 resource blocks (six (first resource blocks 51) used or allocated and six (third resource blocks 53) available), leading to a utilization regarding the first subscriber or first specific user equipment or client entity 21 of 50%. The utilization of the second subscriber (or specific user equipment or client entity 22) corresponds to four (second resource blocks 52) used or allocated, divided by the sum of the available and used or allocated resource blocks, i.e. divided by 10 resource blocks (four (second resource blocks 52) used or allocated and six (third resource blocks 53) available), leading to a utilization regarding the second subscriber or first specific user equipment or client entity 22 of 40%.
Regarding the second period 62 (or second observation (or measurement) time) in Figure 2, the specific base station entity 111 was fully utilized, or all resource blocks were used. As assumed, the scheduling algorithm allocated the same number of resource blocks (i.e. eight first resource blocks 51, and eight second resource blocks 52) to both subscribers 21, 22. There are no free (or available) resource blocks, i.e. no third resource blocks 53 in the second period 62. For the maximum transfer rates, it follow, that the maximum transmission rate of the first specific subscriber 21 corresponds to eight (first) resource blocks 21 (divided by the second period 52), and likewise the maximum transmission rate of the second specific subscriber 22 corresponds to eight (second) resource blocks 22 (divided by the second period 52). For the individual workloads, it follows in both cases a capacity utilization (of the first and of the second subscriber 21, 22) of 100% (i.e. eight resource blocks (used) divided by the sum of eight resource blocks used plus zero resource blocks available.
Regarding the third period 63 (or third observation (or measurement) time): In this third period 63, the specific base station entity 111 is also fully utilized and all resource blocks are distributed or allocated. However, since the second subscriber or user equipment or client entity 22 only has been allocated two (second) resource blocks 52, the second user equipment or client entity 22 (apparently) does not request to transmit any further data, (again assuming the scheduling algorithm as defined above (as otherwise, the scheduler would have allocated more blocks to the second user equipment or client entity 22)). In extreme cases, in case the second user equipment or client entity 22 wanted to transmit more data, the distribution would have been more equal (e.g. it would have been the same as in the second time period 62 previously considered); hence, for the maximum transfer rates, it follow, that the maximum transmission rate of the first specific subscriber 21 corresponds to 14 (first) resource blocks 21 (divided by the second period 52), and likewise the maximum transmission rate of the second specific subscriber 22 corresponds to two (second) resource blocks 22 (divided by the second period 52). For the individual workloads, it follows that the utilization of the first subscriber (or specific user equipment or client entity 21) corresponds to 14 (first resource blocks 51) used or allocated, divided by the sum of the available and used or allocated resource blocks, i.e. divided by 14 resource blocks (14 (first resource blocks 51) used or allocated and zero (third resource blocks 53) available), leading to a utilization regarding the first subscriber or first specific user equipment or client entity 21 of 100%. The utilization of the second subscriber (or specific user equipment or client entity 22) corresponds to two (second resource blocks 52) used or allocated, divided by the sum of the available and used or allocated resource blocks, i.e. divided by 8 resource blocks (two (second resource blocks 52) used or allocated and six resource blocks that would have been available to the second user equipment or client entity 22, assuming the above mentioned scheduling algorithm that would have allocated six additional (second) resource blocks to the second specific user equipment or client entity 22, had it requested more data transmission volume), leading to a utilization regarding the second subscriber or second specific user equipment or client entity 22 of (two divided by the sum of two and six, i.e.) 25%.

These kind of calculations are able to be performed continuously or only for individual time intervals. For each individual time interval the individual maximum transmission rate as well as the load (or utilization) of the concerned subscribers is able to be determined according to the present invention. This information can then be used for, e.g., network monitoring, optimization or even the verification of service level agreements (SLAs). A load of 100% over a longer period of time, for example, indicates that the capacity of the radio cell should be increased. For example, it can be demonstrated which transmission rates a user could have achieved without actually transmitting additional data. These data obtained according to the present invention becomes particularly valuable if it is correlated with other information such as the position (i.e. the location) of the respective subscribers. In addition, the factors that contribute to a certain data transmission rate are available. In case of a limitation of the service level or quality of service, it is possible to draw conclusions regarding whether a limitation was caused, for example, by a very poor radio channel (poor MCS or low data rate that can be transmitted per resource block) or by a very high load (only a small number of available resource blocks).

In Figure 3, an exemplary communication diagram according to the present invention is schematically shown. In this example, the specific base station entity 111 sends or transmits measurement data 201 (typically regarding the plurality of (specific) user equipments or client entities 21, 22, respectively, being connected to or served by the specific base station entity 111) to the measurement node or entity 200, e.g. within the mobile communication network 100.

Regarding an example of an application of the inventive concept, the European Aviation Network is cited. This network consists, among other things, of an LTE mobile communications network consisting of around 300 base stations distributed throughout Europe. Each aircraft represents one client entity, typically comprising a router or routing device abord the aircraft, serving a number of connected client devices within the aircraft. However, from the perspective of the mobile communication network 100, each aircraft is considered as one client entity (as the client devices behind the routing device inside the aircraft are not necessarily visible to the mobile communication network 100). The requested data transfer volume (as well as the maximum transmission rate and the utilization) of each of these (typically flying) client entities are typically the sum of the requested data transfer volume (and, respectively, the maximum transmission rates and/or utilization) of the client devices within the aircraft. For the purpose of fulfilling a service level agreement, a certain data rate might to be guaranteed for each aircraft, e.g. in 95% of the time. However, this data rate only has to be achieved if the aircraft (i.e. its associated client entity) actually requires such a transmission rate. If, for example, there is currently no user traffic, the service level agreement is fulfilled in any case, since the aircraft has not experienced any limitation in its transmission rate. According to the present invention, it is possible to prove directly that the service level agreement is (or has been) fulfilled or complied with. A violation of the service level agreement can only occur at one point in time when a load of 100% has been determined for an aircraft (or a client entity). In this case, only the maximum possible transmission rate (in this case equal to the actual transmission rate) has to be compared with the guaranteed transmission rate.

Furthermore, the determined data according to the present invention, are also valuable for network optimization beyond the verification of SLAs. These data could be correlated with the position of aircrafts, and it is possible to determine exactly at which points in the network a high load occurs or only comparatively low maximum transmission rates are possible. In addition to local capacity problems, coverage problems can also be specifically detected.

Hence, according to the present invention, there is the possibility to enable the simultaneous verification of the individual possible maximum data rates of all subscribers (or user equipments or client entities 20) within a considered geographical area, especially within one or a plurality of (specific) radio cells or base station entities, as well as the individual loads according to (or from) the perspective of the subscribers (or user equipments or client entities), without the mobile communication network 100 being influenced by the measurement itself (i.e. a non-invasive measurement method is proposed). This is especially in contrast to the commonly known active measurements. Conventionally known passive measurement methods provide only a "what was" instead of a "what would have been possible" representation, which - according to the present invention - is made possible by means of knowing the properties of the scheduling algorithm which is accessible by simulation. Furthermore, the collected data allow a detailed conclusion to be drawn about the causes for reaching a certain transmission rate.

## Claims

1. Method for measuring network performance and/or service parameters and/or actual or current transmission bandwidth usage or attainable transmission bandwidth in a mobile communication network (100) involving a plurality of client entities (20), wherein the mobile communication network (100) comprises an access network (110) comprising a plurality of base station entities (111, 112), and wherein the available radio transmission resources of an air interface between the plurality of client entities (20) and the plurality of base station entities (111, 112) are allocated to specific downlink or uplink transmission links - involving, respectively, a specific one of the plurality of base station entities (111, 112) and a specific one of the plurality of client entities (20) - by means of realizing a scheduling of resource blocks (50),
wherein, regarding a specific base station entity (111) and a plurality of specific client entities (21, 22), being connected to or served by the specific base station entity (111), the method comprises the following steps:
-- in a first step, the number of resource blocks allocated (51, 52) to each one of the plurality of specific client entities (21, 22), respectively, in combination with at least one information element selected out of the group of information elements comprising the respective modulation and coding scheme used and further parameters having an influence on the respective usable data transmission rate and/or on the transmitted amount of data are determined or measured at a specific point in time (61) or for a specific time interval (71), and/or
-- in a second step, the number of resource blocks that are available (53) or free to be allocated or that is able to be allocated, in addition to the resource blocks already allocated to one of the plurality of specific client entities (21, 22) by the specific base station entity (111) is determined or measured as well at the same specific point in time (61) or for the same specific time interval (71),
wherein the first step and/or the second step is repeatedly performed or carried out with respect to a plurality of further specific points in time (62, 63) or for a plurality of further specific time intervals (72, 73).

2. Method according to claim 1, wherein both the first and the second steps are performed or carried out at the same specific point in time (61) or for the same specific time interval (71), and wherein both the first and the second steps are repeatedly performed or carried out with respect to a plurality of further specific points in time (62, 63) or for a plurality of further specific time intervals (72, 73).

3. Method according to any of the preceding claims, wherein the plurality of client entities (21, 22) - with regard to which the number of allocated resource blocks (51, 52) in combination with at least one information element selected out of the group of information elements comprising the modulation and coding scheme and further parameters having an influence on the respective usable data transmission rate and/or on the transmitted amount of data are determined or measured - correspond to all client entities (21, 22) connected to or served by the specific base station entity (111), especially at the respective specific point in time or the respective specific time interval of the considered determination or measurement.

4. Method according to any of the preceding claims, wherein the specific point in time (61) and the further specific points in time (62, 63) are periodic points in time according to a periodicity corresponding to the predefined time length of the resource blocks (50), or multiples thereof, especially integer multiples thereof, or
wherein the lengths of the specific time interval (71) and of the further specific time intervals (72, 73) correspond to the predefined time length of the resource blocks (50), or to multiples thereof, especially integer multiples thereof, wherein especially the specific point in time (61) and/or the specific time interval (71) and the further specific points in time (62, 63) and/or the further specific time intervals (72, 73) together continuously cover a certain stretch of time for which network performance and/or service parameters and/or actual or current transmission bandwidth usage or attainable transmission bandwidth is or are measured.

5. Method according to any of the preceding claims, wherein the resource blocks (50) correspond to resource blocks or pairs of consecutive resource blocks according to the GSM standard, global system for mobile communication standard, UMTS standard, universal mobile telecommunication standard, DECT standard, digital enhanced cordless telecommunications standard, LTE standard, long term evolution standard, or according to the 5G/NR standard, fifth generation/new radio standard.

6. Method according to any of the preceding claims, wherein the base station entities (111, 112) of the access network (110) correspond to eNodeB nodes according to the LTE standard, long term evolution standard, or gNodeB nodes according to the 5G/NR standard, fifth generation/new radio standard.

7. Method according to any of the preceding claims, wherein the determination or the measurement of
-- the number of allocated resource blocks (51, 52) in combination with at least one information element selected out of the group of information elements comprising the modulation and coding scheme used and the parameters having an influence on the respective usable data transmission rate and/or on the transmitted amount of data, and/or
-- the number of resource blocks that are available (53) or free to be allocated or that is able to be allocated, in addition to the resource blocks already allocated is performed or carried out
-- at and/or by the specific base station entity (111) or a module or element thereof regarding the plurality of client entities (21, 22) connected to or served by the specific base station entity (111), or
-- at and/or by each one of the plurality of client entities (21, 22) connected to or served by the specific base station entity (111),
wherein especially, in a third step, subsequent to the first and/or second step, measurement data (201) corresponding to such determination or measurement is transmitted to a measurement node or entity (200) within the mobile communication network (100).

8. Method according to any of the preceding claims, wherein - based on the measurement data (201) and regarding the plurality of client entities (21, 22), respectively, being connected to or served by the specific base station entity (111) - the maximum data transmission rate and/or the attainable data transmission rate and/or the load factor is determined or is able to be determined individually regarding the specific point in time or the specific time interval and/or regarding each one of the further specific points in time or the further specific time intervals, respectively.

9. Method according to any of the preceding claims, wherein the specific client entities (21, 22) correspond
-- either to individual user equipments or client devices being connected to or served by the specific base station entity (111),
-- or to local networks being connected to or served by the specific base station entity (111), the local networks encompassing or serving a plurality of user equipments or client devices, wherein the local networks are especially mobile local networks, and especially abord an airborne vehicle such as an aircraft or a rotorcraft, or a land vehicle such as a train or a bus, or a waterborne vessel such as a ship, a hovercraft or a submarine.

10. Mobile communication network for measuring network performance and/or service parameters and/or actual or current transmission bandwidth usage or attainable transmission bandwidth in a mobile communication network (100) involving a plurality of client entities (20), wherein the mobile communication network (100) comprises an access network (110) comprising a plurality of base station entities (111, 112), and wherein the available radio transmission resources of an air interface between the plurality of client entities (20) and the plurality of base station entities (111, 112) are allocated to specific downlink or uplink transmission links - involving, respectively, a specific one of the plurality of base station entities (111, 112) and a specific one of the plurality of client entities (20) - by means of realizing a scheduling of resource blocks (50),
wherein, regarding a specific base station entity (111) and a plurality of specific client entities (21, 22), being connected to or served by the specific base station entity (111), the mobile communication network (100) is configured such that:
-- the number of resource blocks allocated (51, 52) to each one of the plurality of specific client entities (21, 22), respectively, in combination with at least one information element selected out of the group of information elements comprising the respective modulation and coding scheme used and further parameters having an influence on the respective usable data transmission rate and/or on the transmitted amount of data are determined or measured at a specific point in time (61) or for a specific time interval (71), and/or
-- the number of resource blocks that are available (53) or free to be allocated or that is able to be allocated, in addition to the resource blocks already allocated to one of the plurality of specific client entities (21, 22) by the specific base station entity (111) is determined or measured as well at the same specific point in time (61) or for the same specific time interval (71),
wherein this determination or measurement is repeatedly performed or carried out with respect to a plurality of further specific points in time (61, 62) or for a plurality of further specific time intervals (71, 72).

11. Base station entity (111) for measuring network performance and/or service parameters and/or actual or current transmission bandwidth usage or attainable transmission bandwidth in a mobile communication network (100) involving a plurality of client entities (20), wherein the base station entity (111) is part of an access network (110) of the mobile communication network (100), and wherein the available radio transmission resources of the air interface between the base station entity (111) and client entities (20) connected thereto are allocated to specific downlink or uplink transmission links - involving, respectively, the base station entity (111) and a specific one of the connected client entities (20) - by means of realizing a scheduling of resource blocks (50),
wherein, regarding the base station entity (111) and a plurality of specific client entities (21, 22), being connected to or served by the base station entity (111), the base station entity (111) is configured such that:
-- the number of resource blocks allocated (51, 52) to each one of the plurality of specific client entities (21, 22), respectively, in combination with at least one information element selected out of the group of information elements comprising the respective modulation and coding scheme used and further parameters having an influence on the respective usable data transmission rate and/or on the transmitted amount of data are determined or measured at a specific point in time (61) or for a specific time interval (71), and/or
-- the number of resource blocks that are available (53) or free to be allocated or that is able to be allocated, in addition to the resource blocks already allocated to one of the plurality of specific client entities (21, 22) by the specific base station entity (111) is determined or measured as well at the same specific point in time (61) or for the same specific time interval (71),
wherein this determination or measurement is repeatedly performed or carried out, especially by the base station entity (111), with respect to a plurality of further specific points in time (61, 62) or for a plurality of further specific time intervals (71, 72).

12. Client entity (21) for measuring network performance and/or service parameters and/or actual or current transmission bandwidth usage or attainable transmission bandwidth in a mobile communication network (100) being used or being usable in or as part of a mobile communication network (100) according to claim 10, or with or served by a base station entity (111) according to claim 11, or for performing a method according to one of claims 1 to 9.

13. Computer program comprising a computer readable program code which, when executed on a computer or on a base station entity (111, 112) or on a client entity (20) or on a network node of a mobile communication network (100) or in part on a base station entity (111, 112) and/or in part on a client entity (20) and/or in part on a network node of the mobile communication network (100), causes the base station entity (111, 112) or the client entity (20) or the network node of the mobile communication network (100) to perform a method according one of claims 1 to 9.

14. Computer program product for measuring network performance and/or service parameters and/or actual or current transmission bandwidth usage or attainable transmission bandwidth in a mobile communication network (100) involving a plurality of client entities (20), the computer program product comprising a computer program stored on a storage medium, the computer program comprising program code which, when executed on a computer or on a base station entity (111, 112) or on a client entity (20) or on a network node of a mobile communication network (100) or in part on a base station entity (111, 112) and/or in part on a client entity (20) and/or in part on a network node of the mobile communication network (100), causes the base station entity (111, 112) or the client entity (20) or the network node of the mobile communication network (100) to perform a method according to one of claims 1 to 9.

## Amended claims

### Amended claims in accordance with Rule 137(2) EPC.

1. Method for measuring network performance and/or service parameters and/or actual or current transmission bandwidth usage or attainable transmission bandwidth in a mobile communication network (100) involving a plurality of client entities (20), wherein the mobile communication network (100) comprises an access network (110) comprising a plurality of base station entities (111, 112), and wherein the available radio transmission resources of an air interface between the plurality of client entities (20) and the plurality of base station entities (111, 112) are allocated to specific downlink or uplink transmission links - involving, respectively, a specific one of the plurality of base station entities (111, 112) and a specific one of the plurality of client entities (20) - by means of realizing a scheduling of resource blocks (50),
wherein, regarding a specific base station entity (111) and a plurality of specific client entities (21, 22), being connected to or served by the specific base station entity (111), the method comprises the following steps:
-- in a first step, the number of resource blocks allocated (51, 52) to each one of the plurality of specific client entities (21, 22), respectively, in combination with at least one information element selected out of the group of information elements comprising the respective modulation and coding scheme used and further parameters having an influence on the respective usable data transmission rate and/or on the transmitted amount of data are measured at a specific point in time (61) or for a specific time interval (71), and
-- in a second step, the number of resource blocks that are available (53) or free to be allocated or that is able to be allocated, in addition to the resource blocks already allocated to one of the plurality of specific client entities (21, 22) by the specific base station entity (111) is measured as well at the same specific point in time (61) or for the same specific time interval (71),
wherein the first step and the second step are repeatedly performed or carried out with respect to a plurality of further specific points in time (62, 63) or for a plurality of further specific time intervals (72, 73).

2. Method according to claim 1, wherein both the first and the second steps are performed or carried out at the same specific point in time (61) or for the same specific time interval (71), and wherein both the first and the second steps are repeatedly performed or carried out with respect to a plurality of further specific points in time (62, 63) or for a plurality of further specific time intervals (72, 73).

3. Method according to any of the preceding claims, wherein the plurality of client entities (21, 22) - with regard to which the number of allocated resource blocks (51, 52) in combination with at least one information element selected out of the group of information elements comprising the modulation and coding scheme and further parameters having an influence on the respective usable data transmission rate and/or on the transmitted amount of data are determined or measured - correspond to all client entities (21, 22) connected to or served by the specific base station entity (111), especially at the respective specific point in time or the respective specific time interval of the considered determination or measurement.

4. Method according to any of the preceding claims, wherein the specific point in time (61) and the further specific points in time (62, 63) are periodic points in time according to a periodicity corresponding to the predefined time length of the resource blocks (50), or multiples thereof, especially integer multiples thereof, or
wherein the lengths of the specific time interval (71) and of the further specific time intervals (72, 73) correspond to the predefined time length of the resource blocks (50), or to multiples thereof, especially integer multiples thereof, wherein especially the specific point in time (61) and/or the specific time interval (71) and the further specific points in time (62, 63) and/or the further specific time intervals (72, 73) together continuously cover a certain stretch of time for which network performance and/or service parameters and/or actual or current transmission bandwidth usage or attainable transmission bandwidth is or are measured.

5. Method according to any of the preceding claims, wherein the resource blocks (50) correspond to resource blocks or pairs of consecutive resource blocks according to the GSM standard, global system for mobile communication standard, UMTS standard, universal mobile telecommunication standard, DECT standard, digital enhanced cordless telecommunications standard, LTE standard, long term evolution standard, or according to the 5G/NR standard, fifth generation/new radio standard.

6. Method according to any of the preceding claims, wherein the base station entities (111, 112) of the access network (110) correspond to eNodeB nodes according to the LTE standard, long term evolution standard, or gNodeB nodes according to the 5G/NR standard, fifth generation/new radio standard.

7. Method according to any of the preceding claims, wherein the determination or the measurement of
-- the number of allocated resource blocks (51, 52) in combination with at least one information element selected out of the group of information elements comprising the modulation and coding scheme used and the parameters having an influence on the respective usable data transmission rate and/or on the transmitted amount of data, and/or
-- the number of resource blocks that are available (53) or free to be allocated or that is able to be allocated, in addition to the resource blocks already allocated is performed or carried out
-- at and/or by the specific base station entity (111) or a module or element thereof regarding the plurality of client entities (21, 22) connected to or served by the specific base station entity (111), or
-- at and/or by each one of the plurality of client entities (21, 22) connected to or served by the specific base station entity (111),
wherein especially, in a third step, subsequent to the first and/or second step, measurement data (201) corresponding to such determination or measurement is transmitted to a measurement node or entity (200) within the mobile communication network (100).

8. Method according to any of the preceding claims, wherein - based on the measurement data (201) and regarding the plurality of client entities (21, 22), respectively, being connected to or served by the specific base station entity (111) - the maximum data transmission rate and/or the attainable data transmission rate and/or the load factor is determined or is able to be determined individually regarding the specific point in time or the specific time interval and/or regarding each one of the further specific points in time or the further specific time intervals, respectively.

9. Method according to any of the preceding claims, wherein the specific client entities (21, 22) correspond
-- either to individual user equipments or client devices being connected to or served by the specific base station entity (111),
-- or to local networks being connected to or served by the specific base station entity (111), the local networks encompassing or serving a plurality of user equipments or client devices, wherein the local networks are especially mobile local networks, and especially abord an airborne vehicle such as an aircraft or a rotorcraft, or a land vehicle such as a train or a bus, or a waterborne vessel such as a ship, a hovercraft or a submarine.

10. Mobile communication network for measuring network performance and/or service parameters and/or actual or current transmission bandwidth usage or attainable transmission bandwidth in a mobile communication network (100) involving a plurality of client entities (20), wherein the mobile communication network (100) comprises an access network (110) comprising a plurality of base station entities (111, 112), and wherein the available radio transmission resources of an air interface between the plurality of client entities (20) and the plurality of base station entities (111, 112) are allocated to specific downlink or uplink transmission links - involving, respectively, a specific one of the plurality of base station entities (111, 112) and a specific one of the plurality of client entities (20) - by means of realizing a scheduling of resource blocks (50),
wherein, regarding a specific base station entity (111) and a plurality of specific client entities (21, 22), being connected to or served by the specific base station entity (111), the mobile communication network (100) is configured such that:
-- the number of resource blocks allocated (51, 52) to each one of the plurality of specific client entities (21, 22), respectively, in combination with at least one information element selected out of the group of information elements comprising the respective modulation and coding scheme used and further parameters having an influence on the respective usable data transmission rate and/or on the transmitted amount of data are measured at a specific point in time (61) or for a specific time interval (71), and
-- the number of resource blocks that are available (53) or free to be allocated or that is able to be allocated, in addition to the resource blocks already allocated to one of the plurality of specific client entities (21, 22) by the specific base station entity (111) is measured as well at the same specific point in time (61) or for the same specific time interval (71),
wherein this measurement is repeatedly performed or carried out with respect to a plurality of further specific points in time (61, 62) or for a plurality of further specific time intervals (71, 72).

11. Base station entity (111) for measuring network performance and/or service parameters and/or actual or current transmission bandwidth usage or attainable transmission bandwidth in a mobile communication network (100) involving a plurality of client entities (20), wherein the base station entity (111) is part of an access network (110) of the mobile communication network (100), and wherein the available radio transmission resources of the air interface between the base station entity (111) and client entities (20) connected thereto are allocated to specific downlink or uplink transmission links - involving, respectively, the base station entity (111) and a specific one of the connected client entities (20) - by means of realizing a scheduling of resource blocks (50),
wherein, regarding the base station entity (111) and a plurality of specific client entities (21, 22), being connected to or served by the base station entity (111), the base station entity (111) is configured such that:
-- the number of resource blocks allocated (51, 52) to each one of the plurality of specific client entities (21, 22), respectively, in combination with at least one information element selected out of the group of information elements comprising the respective modulation and coding scheme used and further parameters having an influence on the respective usable data transmission rate and/or on the transmitted amount of data are measured at a specific point in time (61) or for a specific time interval (71), and
-- the number of resource blocks that are available (53) or free to be allocated or that is able to be allocated, in addition to the resource blocks already allocated to one of the plurality of specific client entities (21, 22) by the specific base station entity (111) is measured as well at the same specific point in time (61) or for the same specific time interval (71),
wherein this measurement is repeatedly performed or carried out, especially by the base station entity (111), with respect to a plurality of further specific points in time (61, 62) or for a plurality of further specific time intervals (71, 72).

12. Client entity (21) for measuring network performance and/or service parameters and/or actual or current transmission bandwidth usage or attainable transmission bandwidth in a mobile communication network (100) being used or being usable in or as part of a mobile communication network (100) according to claim 10, or with or served by a base station entity (111) according to claim 11, or for performing a method according to one of claims 1 to 9.

13. Computer program comprising a computer readable program code which, when executed on a computer or on a base station entity (111, 112) or on a client entity (20) or on a network node of a mobile communication network (100) or in part on a base station entity (111, 112) and/or in part on a client entity (20) and/or in part on a network node of the mobile communication network (100), causes the base station entity (111, 112) or the client entity (20) or the network node of the mobile communication network (100) to perform a method according one of claims 1 to 9.

14. Computer program product for measuring network performance and/or service parameters and/or actual or current transmission bandwidth usage or attainable transmission bandwidth in a mobile communication network (100) involving a plurality of client entities (20), the computer program product comprising a computer program stored on a storage medium, the computer program comprising program code which, when executed on a computer or on a base station entity (111, 112) or on a client entity (20) or on a network node of a mobile communication network (100) or in part on a base station entity (111, 112) and/or in part on a client entity (20) and/or in part on a network node of the mobile communication network (100), causes the base station entity (111, 112) or the client entity (20) or the network node of the mobile communication network (100) to perform a method according to one of claims 1 to 9.
